# EUROPEAN PATENT APPLICATION

(11) **EP 3 869 771 A1**
(43) Date of publication of application: **25.08.2021**
(21) Application number: 21157683.0
(22) Date of filing: 17.02.2021
(51) Int. Cl.: H04L 29/08, G06Q 10/02, G06Q 10/10, H04W 4/33, F24F 11/30

(54) **SYSTEM AND METHOD FOR SCHEDULING AND TRACKING OFFICE SPACE AND USAGE**

(30) Priority: 18.02.2020 US 202062978039 P
(71) Applicant: Fresh Ideas for Offices, Inc., Boston, MA 02210 (US)
(72) Inventor: Beloshapkova, Elena, Boston, MA, 02210 (US)
(74) Representative: Kaminski Harmann

(57) **Abstract**

Exemplary embodiments of the present invention utilize passive near-field communication (NFC) devices placed in various office spaces (e.g., offices, workstations, meeting rooms, etc.) to provide access to various scheduling and monitoring services.

## Description

### CROSS-REFERENCE TO RELATED APPLICATION(S)

This patent application claims the benefit of United States Provisional Patent Application No. 62/978,039 entitled **SYSTEM AND METHOD FOR SCHEDULING AND TRACKING OFFICE SPACE AND USAGE** filed February 18, 2020, which is hereby incorporated herein by reference in its entirety.

### FIELD OF THE INVENTION

The invention generally relates to scheduling and tracking office space and usage.

### BACKGROUND OF THE INVENTION

Statistically, in a company with 1000 employees, 20 of them would be on sick leave, 38 would be on vacation, and 140 will be having meetings out of the office or working remotely at a time. 19.8% of all assigned desks stay empty leaving space underutilized.

Globally more and more businesses are adopting coworking settings within their own walls or moving teams off-site to coworking spaces, however, they are missing the opportunity to manage space utilization in a data-driven way.

Classic booking systems are not built for the future of work and are an administrative burden. Employees lack a convenient social tool to manage their physical working space.

### SUMMARY OF VARIOUS EMBODIMENTS

In accordance with one embodiment of the invention, an office space scheduling and monitoring system comprises a plurality of uniquely identifiable passive near-field communication (NFC) devices, each passive NFC device associated with a distinct office space, each distinct office space including at least one resource; and a server in communication with a plurality of wirelessly-connected user mobile computing devices over a first network, each of the user mobile computing devices running an office space scheduling and monitoring application configured to read unique identifying information from a passive NFC device in an office space when the user scans the passive NFC device by placing the user's mobile communication device in close proximity to the passive NFC device and to produce a user interface providing access to office space scheduling and monitoring services managed by the server, the server including at least one processor and at least one tangible, non-transitory computer storage device having stored therein computer program instructions which, when executed by the at least one processor, causes the server to perform computer processes comprising providing a configuration interface for mapping each passive NFC device to the distinct office space with which it is associated and to define the at least one resource associated with that distinct office space; maintaining a database storing a mapping of each passive NFC device to the distinct office space with which it is associated; maintaining a database storing usage information for each distinct office space including at least availability of each resource associated with the distinct office space and identification of occupants utilizing each distinct office space; receiving, from the office space scheduling and monitoring application in a given user mobile computing device, identifying information read from a given passive NFC device in a given office space in response to a user scan of the given passive NFC device; identifying the given office space based on the identifying information received from the given user mobile computing device and the mapping maintained by the server; retrieving usage information for the at least one resource associated with the identified office space; and transmitting the retrieved usage information by the server to the given user mobile computing device via a wireless communication connection to the given user mobile computing device, such transmission activating the office space scheduling and monitoring application running on the given user mobile communication device to produce the user interface providing access to office space scheduling and monitoring services managed by the server including at least a map showing availability of office space resources and an interface for reserving office space resources and locating occupants of office spaces based on the usage information maintained by the server.

In various alternative embodiments, the office space scheduling and monitoring services may include viewing availability of the at least one resource associated with the identified office space, reservation of the at least one resource associated with the identified office space, dynamic location of an occupant utilizing an office space, and/or detecting a change in usage information associated with the given office space and dynamically transmitting updated usage information by the server to the given user mobile computing device reflecting the change in usage information. Each distinct office space may be associated with a floor of a building, in which case the user interface may provide a map showing availability of office space resources for a selected floor. In any of the described embodiments, the computer processes may further include analytics of office space usage, and the configuration interface may provide a heat map depicting office space usage.

In accordance with another embodiment of the invention, there is provided a computer-implemented method for providing office space scheduling and monitoring in a system having a plurality of uniquely identifiable passive near-field communication (NFC) devices, each passive NFC device associated with a distinct office space, each distinct office space including at least one resource, and a server in communication with a plurality of wirelessly-connected user mobile computing devices over a first network, each of the user mobile computing devices running an office space scheduling and monitoring application configured to read unique identifying information from a passive NFC device in an office space when the user scans the passive NFC device by placing the user's mobile communication device in close proximity to the passive NFC device and to produce a user interface providing access to office space scheduling and monitoring services managed by the server, the method comprising providing, by the server, a configuration interface for mapping each passive NFC device to the distinct office space with which it is associated and to define the at least one resource associated with that distinct office space; maintaining, by the server, a database storing a mapping of each passive NFC device to the distinct office space with which it is associated; maintaining, by the server, a database storing usage information for each distinct office space including at least availability of each resource associated with the distinct office space and identification of occupants utilizing each distinct office space; receiving, by the server, from the office space scheduling and monitoring application in a given user mobile computing device, identifying information read from a given passive NFC device in a given office space in response to a user scan of the given passive NFC device; identifying, by the server, the given office space based on the identifying information received from the given user mobile computing device and the mapping maintained by the server; retrieving, by the server, usage information for the at least one resource associated with the identified office space; and transmitting the retrieved usage information by the server to the given user mobile computing device via a wireless communication connection to the given user mobile computing device, such transmission activating the office space scheduling and monitoring application running on the given user mobile communication device to produce the user interface providing access to office space scheduling and monitoring services managed by the server including at least a map showing availability of office space resources and an interface for reserving office space resources and locating occupants of office spaces based on the usage information maintained by the server.

In various alternative embodiments, the office space scheduling and monitoring services may include viewing availability of the at least one resource associated with the identified office space, reservation of the at least one resource associated with the identified office space, dynamic location of an occupant utilizing an office space, and/or detecting a change in usage information associated with the given office space and dynamically transmitting updated usage information by the server to the given user mobile computing device reflecting the change in usage information. Each distinct office space may be associated with a floor of a building, in which case the user interface may provide a map showing availability of office space resources for a selected floor. In any of the described embodiments, the computer processes may further include analytics of office space usage, and the configuration interface may provide a heat map depicting office space usage.

In accordance with another embodiment of the invention, there is provided a tangible, non-transitory computer-readable medium having stored therein an office space scheduling and monitoring application which, when executed by a processor of a user mobile communication device, causes the server to perform computer processes comprising reading unique identifying information from a passive NFC device associated with an office space when the user scans the passive NFC device by placing the user mobile communication device in close proximity to the passive NFC device; transmitting the unique identifying information to a server; receiving, from the server, usage information related to the office space; and producing, on a display of the user mobile communication device, a user interface providing access to office space scheduling and monitoring services managed by the server.

Additional embodiments may be disclosed and claimed.

### BRIEF DESCRIPTION OF THE DRAWINGS

Those skilled in the art should more fully appreciate advantages of various embodiments of the invention from the following "Description of Illustrative Embodiments," discussed with reference to the drawings summarized immediately below.
FIG. 1 shows an NFC device placed on a conference room table (the black circular device at the middle of the table), in accordance with one exemplary embodiment.
FIG. 2 shows a user scanning an NFC device with a smartphone running the scheduling and monitoring app, in accordance with the exemplary embodiment of FIG. 1.
FIG. 3 is a schematic diagram showing an example of the type of screen that might be displayed upon scanning an NFC device with the smartphone, in accordance with one exemplary embodiment.
FIG. 4 is a schematic diagram showing an example of a user selection to reserve a workstation, in accordance with one exemplary embodiment.
FIG. 5 is a schematic diagram showing an example in which the user has selected in-use workstation number 8, in which case the app obtains usage information for the workstation (e.g., from the central server) and displays information regarding the user of the resource, which in this example includes a photograph of that user.
FIG. 6 is a schematic diagram showing example dashboard displays showing analytic information and a heat map, in accordance with one exemplary embodiment.
FIG. 7 shows an exemplary screen displaying a portion of an office floor, with various controls to allow the user to select operations including bookings, people, profile, find friends, and find spaces.
FIG. 8 shows an exemplary screen that might appear when the user selects the find friends icon in FIG. 7.
FIG. 9 shows an exemplary screen that might appear when the user selects the find spaces icon in FIG. 7.
FIG. 10 shows an exemplary screen that might appear when the user additionally selects the work space control in FIG. 9.
FIG. 11 shows a portion of the screen of FIG. 7 expanded to highlight conference table 1.
FIG. 12 shows an exemplary screen after the user selects conference table 1 from FIG. 11 in order to enter a reservation (booking).
FIG. 13 shows a portion of the screen of FIG. 7 expanded to highlight conference table 1 and workstations 1-6.
FIG. 14 shows an exemplary screen after the user selects available workstation 5 from FIG. 13 in order to enter a reservation (booking).
FIG. 15 shows an exemplary screen for entering booking information such as the time for the booking and the people who will be present for the booking.
FIG. 16 shows an exemplary screen that might be displayed when the user selects "choose people from list" in the screen of FIG. 15.
FIG. 17 shows an exemplary screen that is an updated version of the screen of FIG. 15 after people have been chosen from the screen of FIG. 16.
FIG. 18 shows an exemplary screen that might be displayed when the user selects "choose time" in the screen of FIG. 15.
FIG. 19 shows an exemplary screen for a specific friend.
FIG. 20 shows an exemplary screen showing the friend's location on the map after the user selects "show on map" from FIG. 19.

It should be noted that the foregoing figures and the elements depicted therein are not necessarily drawn to consistent scale or to any scale. Unless the context otherwise suggests, like elements are indicated by like numerals. It should be noted that faces shown in various figures have been obfuscated.

### DESCRIPTION OF ILLUSTRATIVE EMBODIMENTS

Exemplary embodiments of the present invention utilize passive near-field communication (NFC) devices placed in various office areas (e.g., offices, workstations, meeting rooms, etc.) to provide access to various scheduling and monitoring services. Specifically, each NFC device is mapped to a specific office space, e.g., at a central server which may be cloud-based. Each user runs a scheduling and monitoring "app" on his or her mobile communication device (e.g., smartphone or tablet computer) and can access office scheduling and monitoring services by simply placing his or her portable communication device in close proximity to an NFC device, where the app reads identifying information from the NFC device and, based on the mapping of NFC device to office space (e.g., by the app communicating with the central server), automatically presents a user interface on the mobile communication device providing scheduling and monitoring information for the identified office space. Thus, for example, the user can go to a particular office space and scan the NFC device in order to access availability information for the office space and reserve available office space. Reservations and other actions are communicated to the central server, which tracks office space usage (e.g., availability, identification of occupants, etc.) and selectively provides office space usage information to the mobile communication devices such as for providing updated availability information and for allowing users to find the location of co-workers as they move from space to space over time. NFC devices can be placed in any convenient location, such as on an individual desk, on a meeting room table, on an office door, on a table or wall outside an office space, etc. NFC devices easily can be provided to customers (e.g.., by mail) and installed by customers without requiring any batteries or power connection. A configuration interface allows the customer to associate each NFC device with a specific office space and to define the resources associated with that office space, e.g., the number of seats, workspaces, etc.

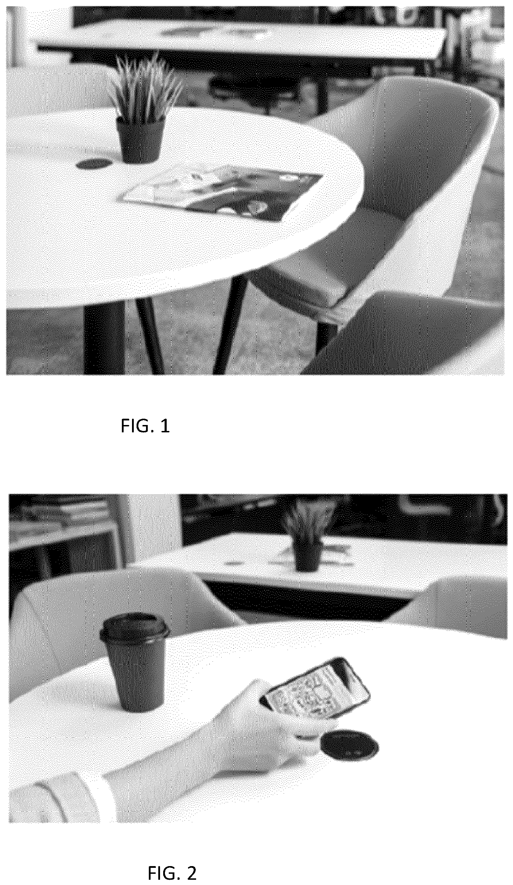

FIG. 1 shows an NFC device placed on a conference room table (the black circular device at the middle of the table), in accordance with one exemplary embodiment.

FIG. 2 shows a user scanning an NFC device with a smartphone running the scheduling and monitoring app, in accordance with the exemplary embodiment of FIG. 1.

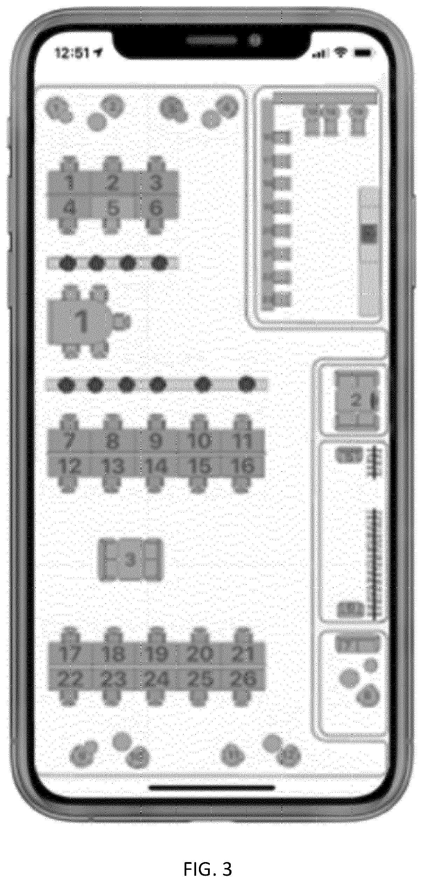

FIG. 3 is a schematic diagram showing an example of the type of screen that might be displayed upon scanning an NFC device with the smartphone, in accordance with one exemplary embodiment. Here, the NFC device is associated with an office space area that includes various workstations numbered 1-26, a conference table with 5 chairs, some casual seating, and other resources. The resources are color-coded to show their availability status, e.g., green might represent that a resource is available, orange might represent that a resource is unavailable, and blue might represent a resource selected by the user such as to obtain status information on that resource or to reserve that resource. Exemplary embodiments can handle both fixed seating arrangements and flexible seating arrangements, e.g., allowing reservations including chairs to be moved from one table to another such as to accommodate the needs of multiple groups. The resources in an office space area can be configured in advance by an administrator and can be tracked by the central server, e.g., as resources are moved into, out of, or within the office space area. Bookings of office space areas can be limited such as by departments or teams, e.g., to enforce social distancing or other separation requirements (e.g., for privacy) between designated groups. Bookings of office space areas can be limited such as by area, distance, occupancy, etc., e.g., to enforce social distancing or other separation requirements. For example, a slider control or other user control can be provided for selecting a limit (e.g., reduce capacity by 50%, limit occupancy to 25%, etc.) and the central server can enforce the limit such as by marking certain office space areas as being unavailable or unusable (e.g., in order to provide space between in-use office space areas) or by reducing capacity of certain office space areas. This can be done so that in a pandemic, people do not sit nearby and can meet the requirements of state institutions.

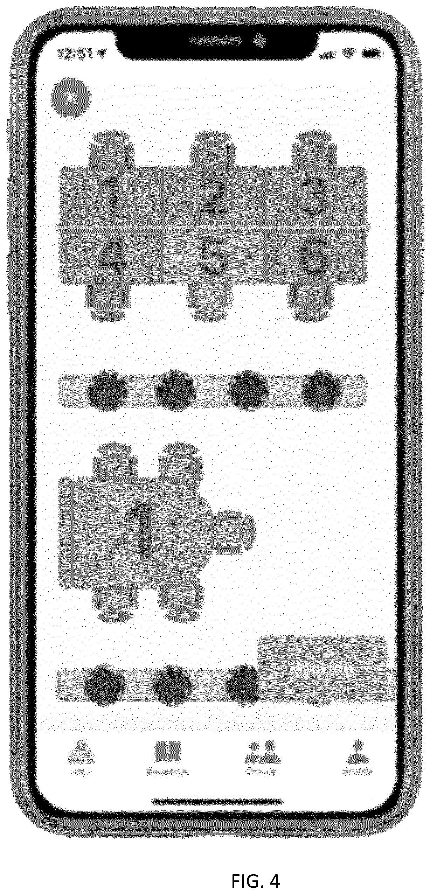

FIG. 4 is a schematic diagram showing an example of a user selection to reserve a workstation, in accordance with one exemplary embodiment. Here, from the screen shown in FIG. 3, the user has selected (e.g., tapped on) available workstation number 5. In some cases, the user may be able to select the amount of time to reserve the resource, while in other cases, the amount of time may be predetermined or selected by the central server, e.g., based on demand. The app sends appropriate information to the central server, such as the workspace number and the identity of the person reserving the workspace (or the identity of a person for which the reservation is being made). The central server then updates its database to indicate that workstation number 5 is reserved. Information may be sent to certain mobile communication devices (e.g., other mobile communication devices whose users are looking at the same office space area) to update workstation number 5 as being unavailable.

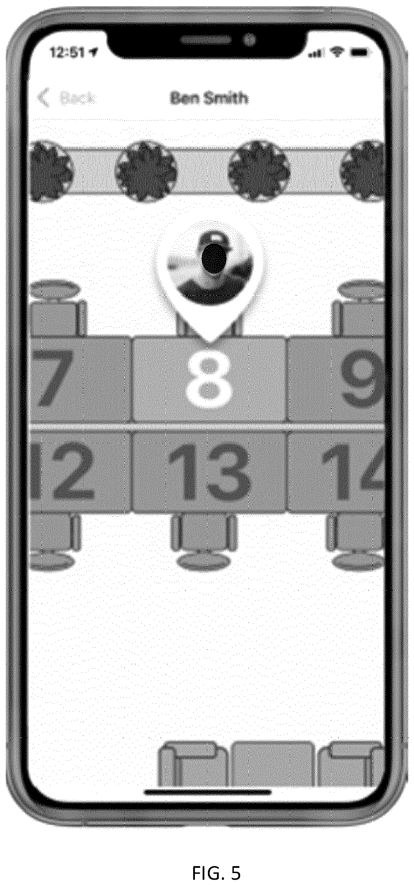

In exemplary embodiments, the app includes a "find friend" feature that allows a user to find the location of a particular friend or colleague. The user can enter the name of a person or select the name from a list of names, and the app displays where the person is sitting, e.g., by displaying a map showing the location. FIG. 5 is a schematic diagram showing an example in which the user has selected in-use workstation number 8, in which case the app obtains usage information for the workstation (e.g., from the central server) and displays information regarding the user of the resource, which in this example includes a photograph of that user. Similarly, the app can include a feature to allow a user to see who has reserved a particular resource, such as by tapping on or navigating to the resource and displaying information regarding the user of the resource, for example, as in FIG. 5.

Alternative embodiments may provide other ways for a user to scan a resource via the app, such as, for example, by snapping a photograph of a room number or workstation number. For example, in addition to having a NFC device, or alternatively to having a NFC device, each resource may be tagged with a number that can be captured by the app using the mobile communication device camera. The system generally would operate the same as scanning an NFC device.

Alternative embodiments additionally or alternative could allow the app to identify a resource or group of possible resources for the user based on the location of the user, e.g., using GPS or WiFi location information. For example, the app might be able to determine that the user is standing in a particular conference room or office area and automatically display relevant resources available to the user.

In exemplary embodiments, the app also allows users to schedule and track resources without scanning an NFC device, for example, by allowing the user to access floorplans or other maps of office spaces and select a particular resource in order to reserve it or obtain information about it.

Overall, exemplary embodiments can allow users to choose a workspace that meets his or her needs, make physical spaces more social, bring virtual collaboration in the physical world, help working groups collocate, and make space reservation a fun and light process. The system also can provide a wide range of analytics, such as identifying which workstations are the most popular and which are rarely used, determining if there is a need for more conference or lounge areas or if existing areas are underused, displaying dashboards for targeted analysis and interpretation, and showing so-called "heat maps" with the "warmest" areas that are used the most and "coldest" areas that are used the least. Overall, the system can provide facility managers access to a tool to measure and improve utilization of the space, create data-driven case for converting underutilized assets, cut office rental and operating costs, improve collaboration, and increase job satisfaction levels.

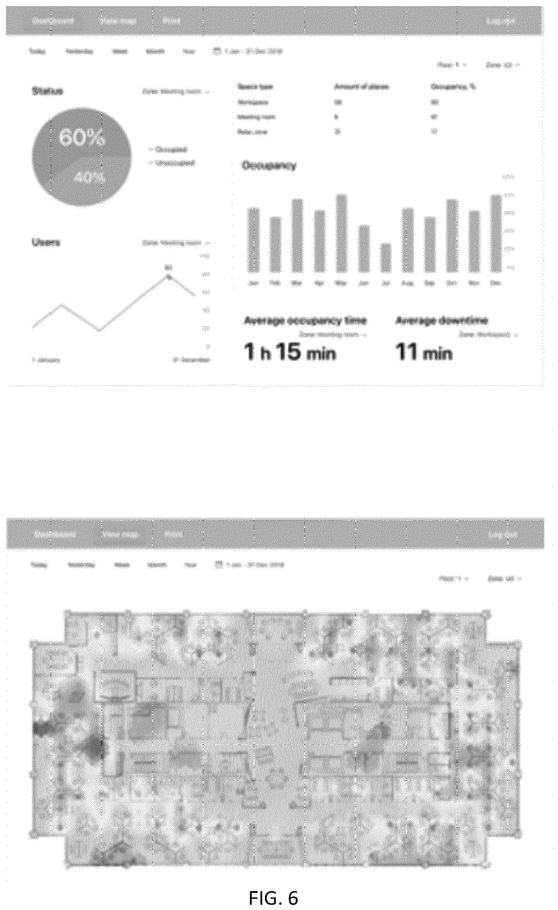

FIG. 6 is a schematic diagram showing example dashboard displays showing analytic information (top) and a heat map (bottom), in accordance with one exemplary embodiment. Among other things, the analytic information includes a pie graph showing current occupation status (in this example, 60% occupied, 40% unoccupied), a graph of usage information, usage information broken out by space type, occupancy history by month, average occupancy time, and average downtime. The heat map uses color to show usage information, e.g., red and orange = high usage, blue and purple - low usage. Overall, the analytic information can be used for future planning, e.g., where one might add more tables or workstations.

Some exemplary app features are now described in greater detail.

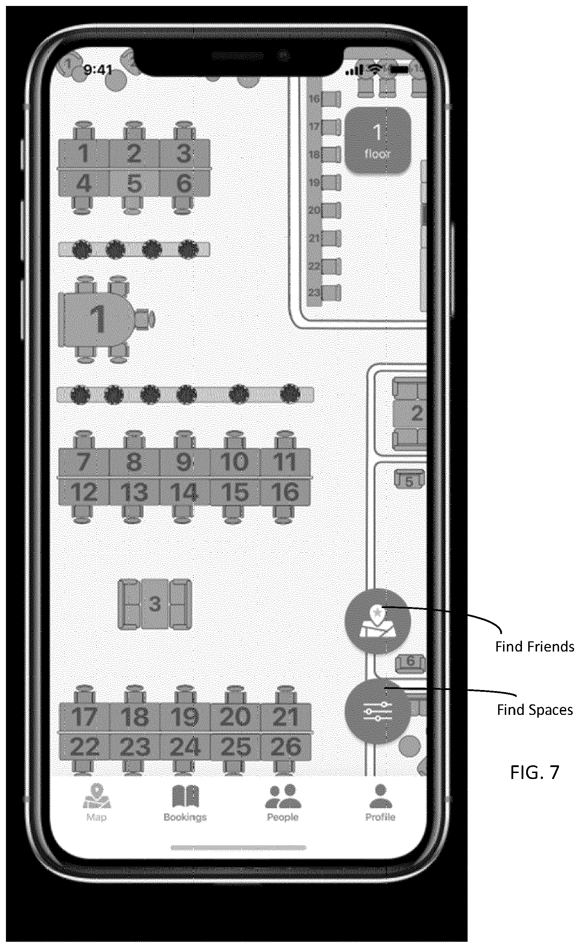

FIG. 7 shows an exemplary screen displaying a portion of an office floor, with various controls to allow the user to select operations including bookings, people, profile, find friends, and find spaces.

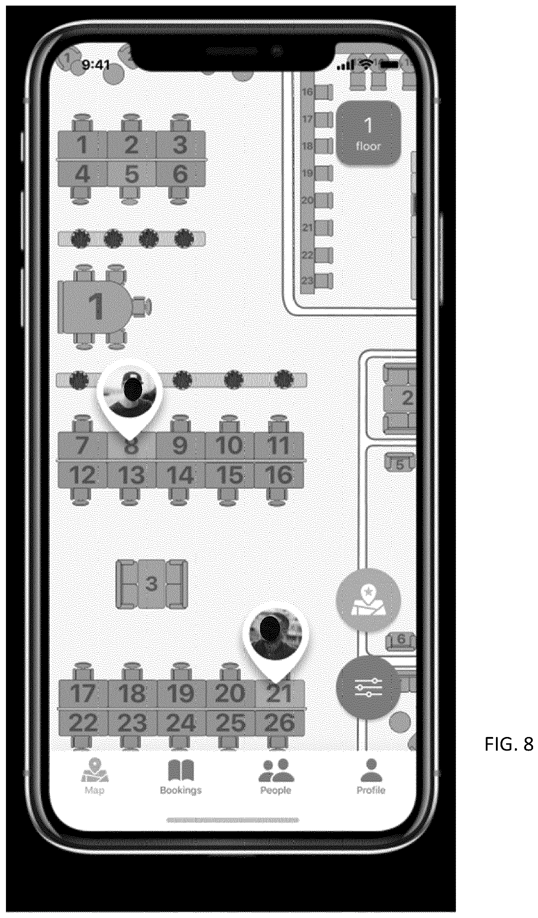

FIG. 8 shows an exemplary screen that might appear when the user selects the find friends icon in FIG. 7. Here, the user's friends who are located in that portion of the office floor are displayed.

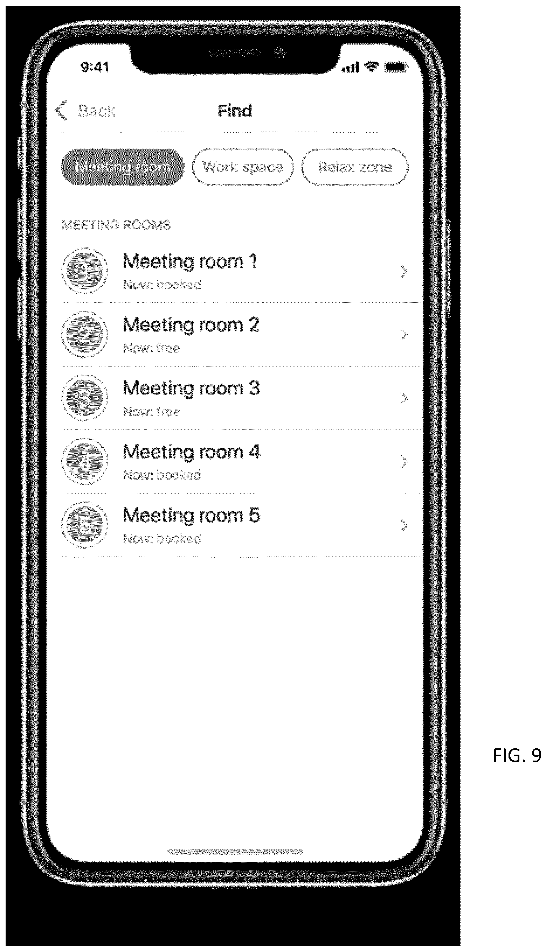

FIG. 9 shows an exemplary screen that might appear when the user selects the find spaces icon in FIG. 7. Here, the user can choose to view meeting rooms, work spaces, and/or relax zones. In this example screen, the meeting rooms are listed with status information.

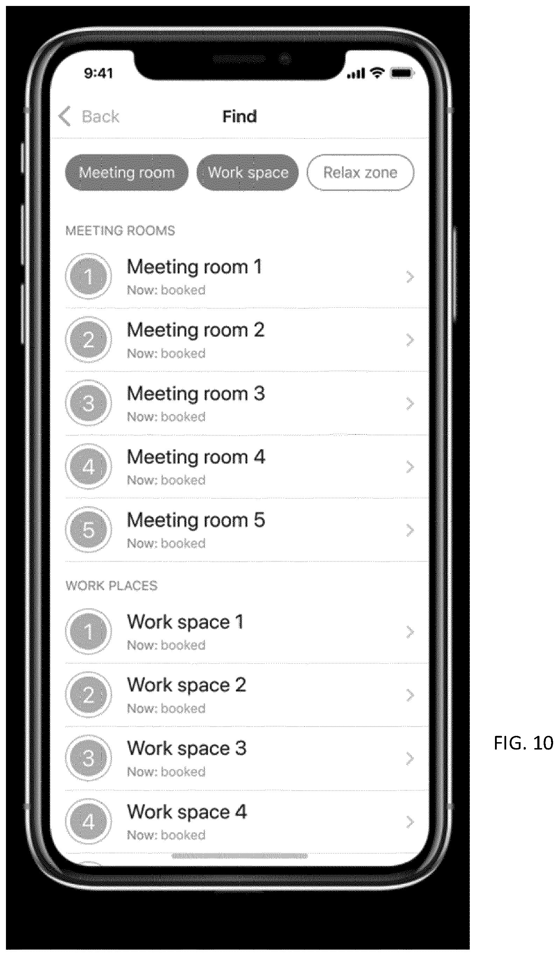

FIG. 10 shows an exemplary screen that might appear when the user additionally selects the work space control in FIG. 9. In this example screen, the meeting rooms and work spaces are listed with status information.

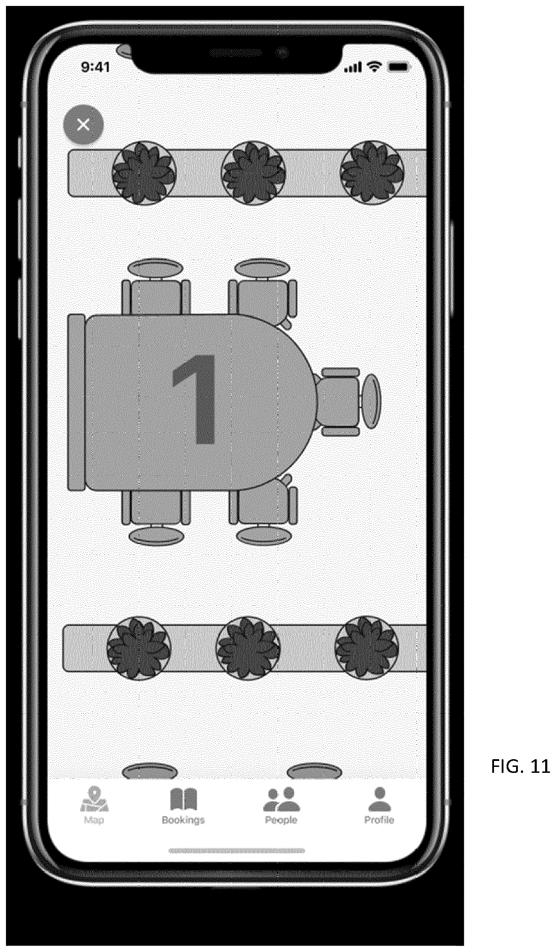

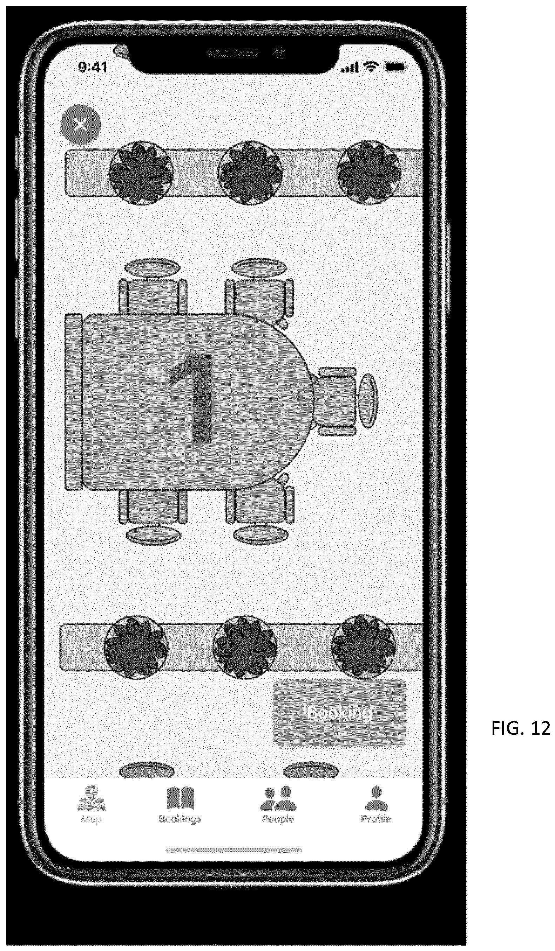

FIG. 11 shows a portion of the screen of FIG. 7 expanded to highlight conference table 1. From this screen, the user can select the conference table in order to enter a reservation (booking), as shown in FIG. 12.

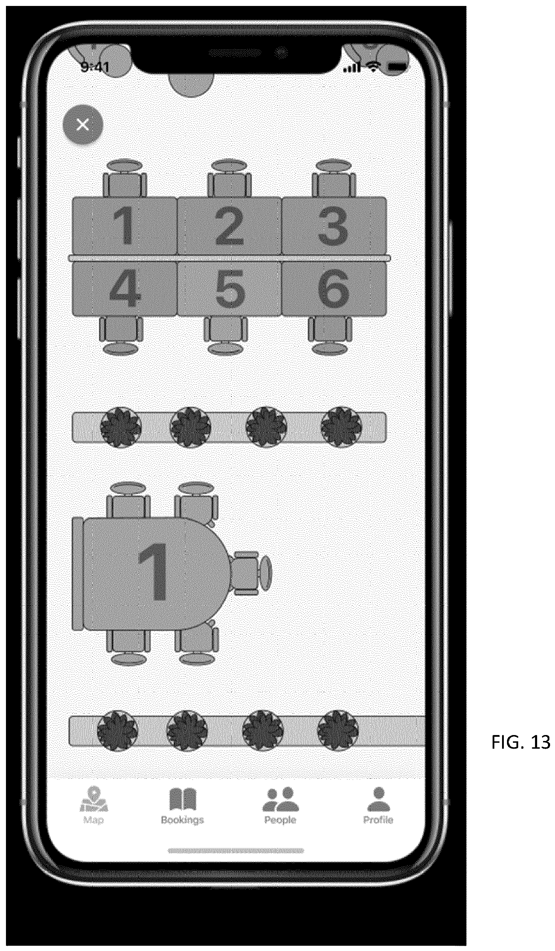

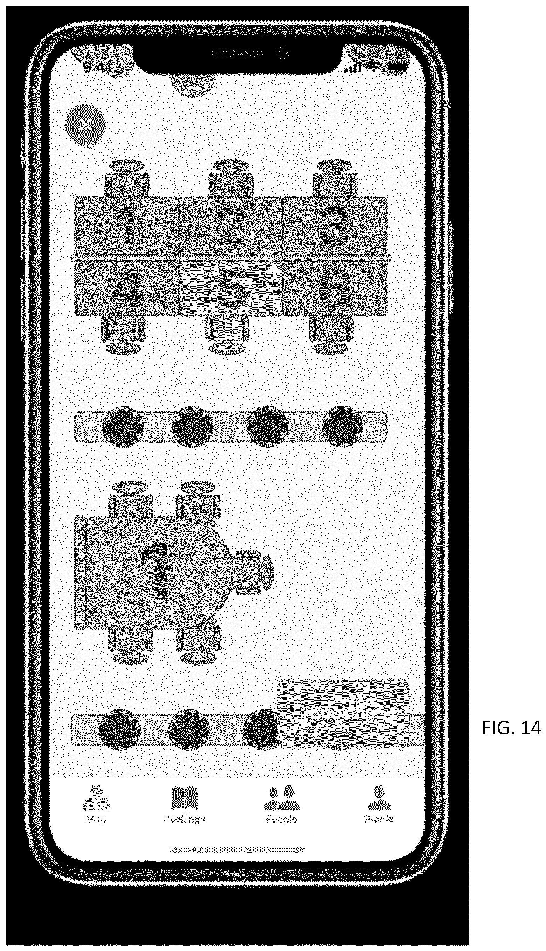

FIG. 13 shows a portion of the screen of FIG. 7 expanded to highlight conference table 1 and workstations 1-6. From this screen, the user can select available workstation 5 in order to enter a reservation (booking), as shown in FIG. 14.

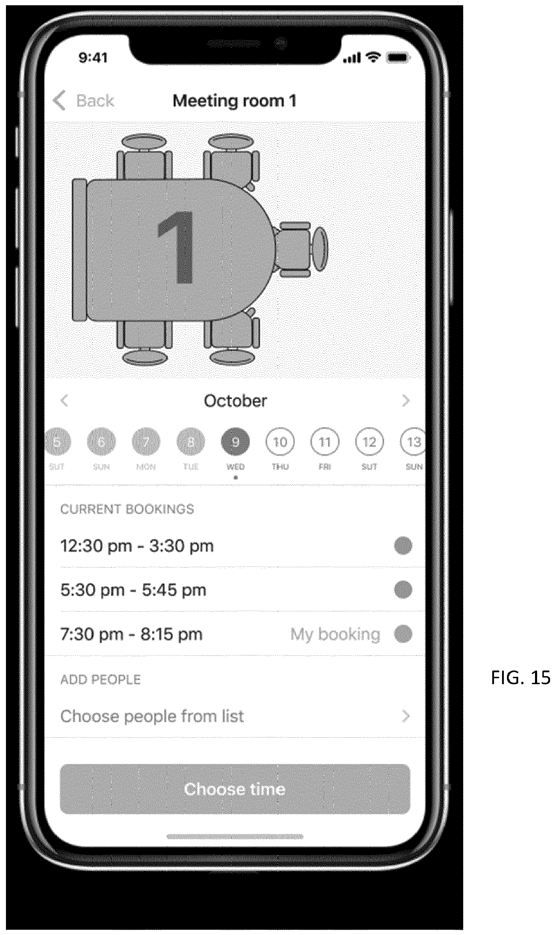

FIG. 15 shows an exemplary screen for entering booking information such as the time for the booking and the people who will be present for the booking.

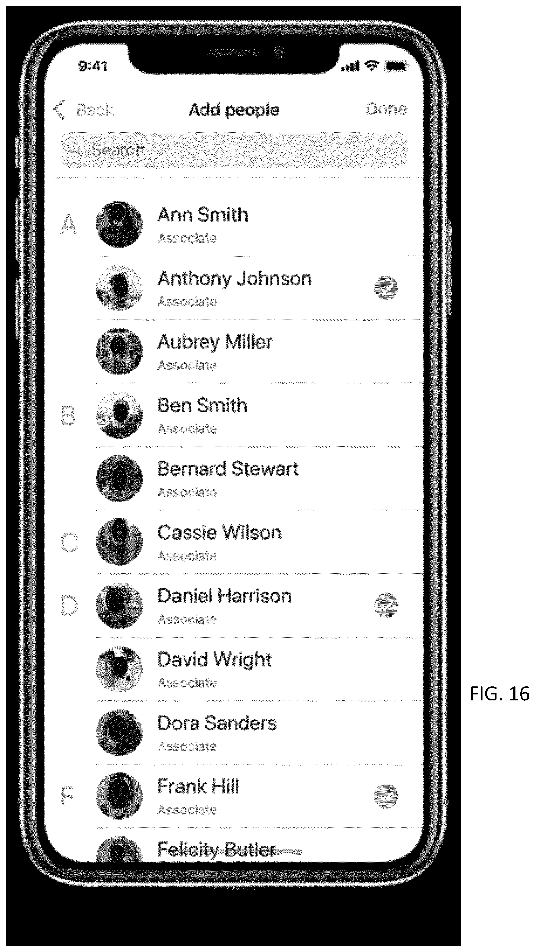

FIG. 16 shows an exemplary screen that might be displayed when the user selects "choose people from list" in the screen of FIG. 15. From this screen, the user can select one or more people for the booking.

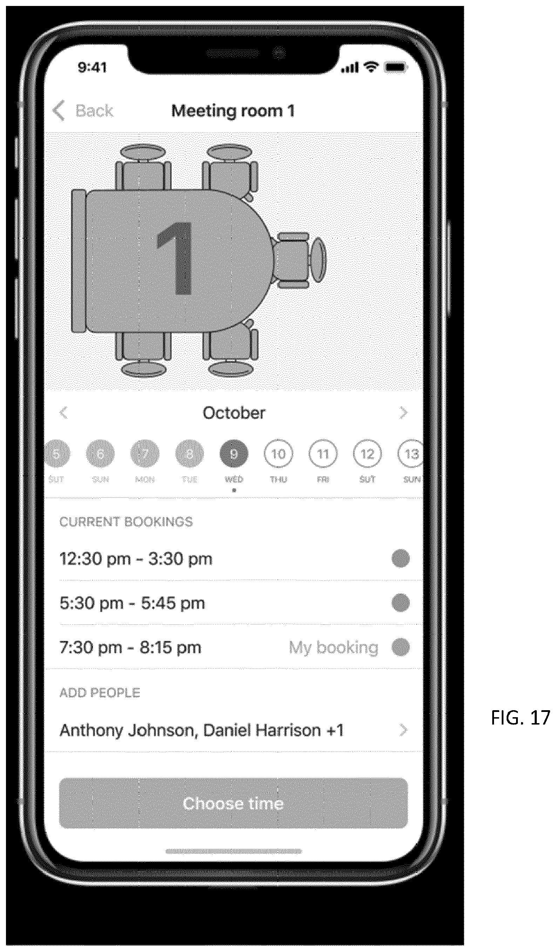

FIG. 17 shows an exemplary screen that is an updated version of the screen of FIG. 15 after people have been chosen from the screen of FIG. 16.

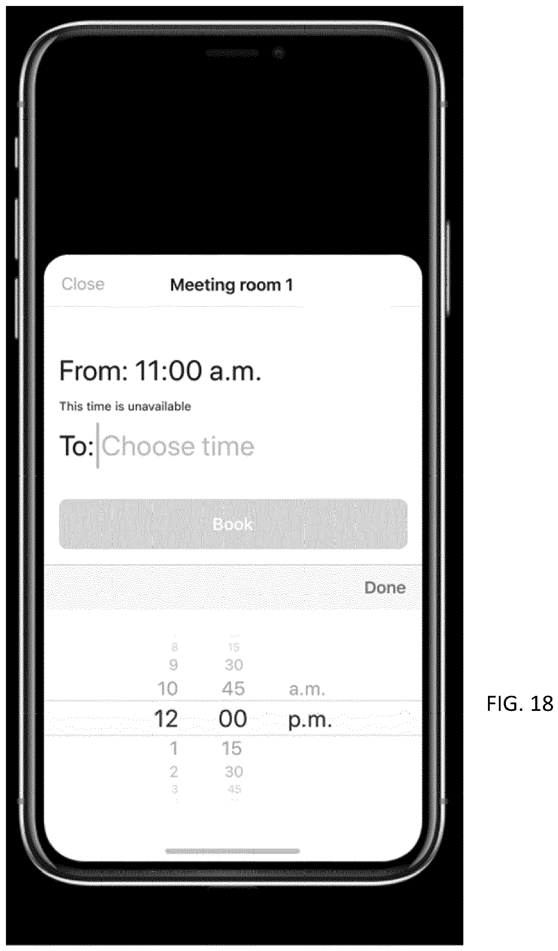

FIG. 18 shows an exemplary screen that might be displayed when the user selects "choose time" in the screen of FIG. 15. From this screen, the user can enter the time and duration of the booking.

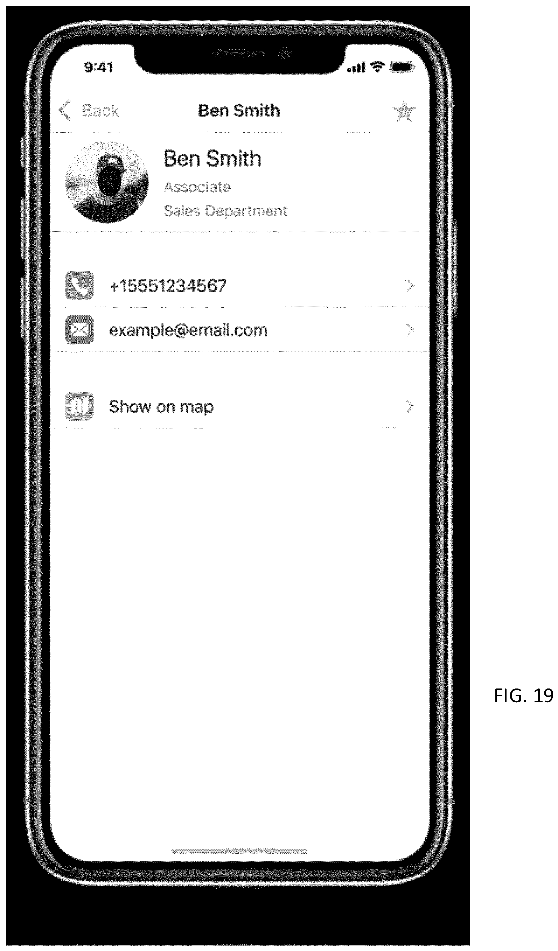

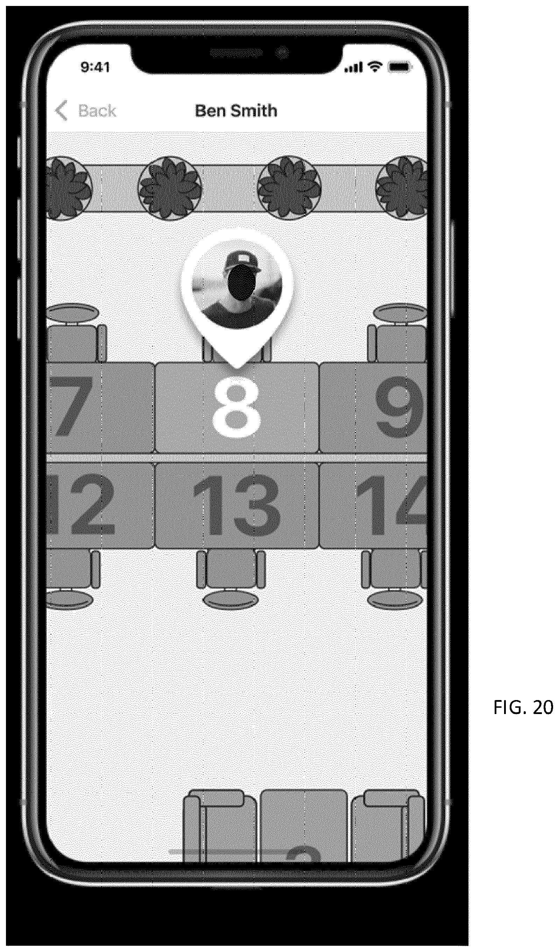

FIG. 19 shows an exemplary screen for a specific friend. From this screen, the user can select "show on map" to show the friend's location on the map, as shown in FIG. 20.

It should be noted that exemplary embodiments can provide an alternative access mechanism (e.g., a web-based interface) to users who are not running the app or using a smartphone (e.g., a web-based interface). Rather than identifying an office space area by scanning a passive NFC device or other mechanism described herein, such an alternative access mechanism can allow the user to identify an office space area in other ways (e.g., selecting from a list of office space areas) and otherwise can provide the same types of functionality as for those using a smartphone/app.

After a booking is made, the central server generally will track the booking organizer to allow other users to view who made the booking (e.g., as a contact person in case there are any questions about the booking). The central server also can allow the organizer or other authorized person to perform ancillary functions such as making changes (e.g., adding or removing participants, changing resources needed for the booking, moving the booking to another office space area subject to availability, etc.), adding a subject for the booking (e.g., the subject of a meeting), arranging for other resources needed for the booking (e.g., additional chairs that can be reserved from other office space areas, projector/screen, whiteboard/markers, food/drink, etc.), creating a recurring booking (e.g., repeating the same booking every month, every week, etc.), etc. The central server can automatically send invitations to participants (e.g., calendar invite, online or video invite such as for participants who will be on vacation or working from home, etc.). Such invitations can include information such as the subject, the office space area, the organizer, and the participants, and also can including recurrence if the booking is a recurring booking. The central server also can automatically send invitation updates, e.g., if the participants are added or removed or if the booking is moved to another office space area. The central server also can provide notifications and reminders to the organizer or other designee (e.g., a facilities manager) so that resources needed for a particular booking can be set up in advance of the booking and can be cleaned up following the booking (e.g., returning borrowed resources to other office space areas, cleaning/restocking in preparation for a subsequent booking, etc.). The central server can automatically create guest passes or notify building security as needed for meeting participants (e.g., parking passes, building entry passes, etc.). The central server can send passes to participants via such things as the app, text message, email, etc.

The central server also can track meeting participants such as for contact tracing. For example, participants in a meeting may be required to check-in such as by scanning the passive NFC device or otherwise informing the central server of presence at the meeting (e.g., through the app or web-based interface). The central server can contact any scheduled participants who have not checked in, e.g., as a reminder of the meeting and to determine whether or not those participants are in attendance or plan to attend (e.g., a person might be at the meeting but might have forgotten to check in). The central server can provide a communication interface through which the organizer or other authorized person or the central server can contact meeting participants, e.g., to follow-up on a meeting topic, to schedule a follow-on meeting, to notify participants of an event (e.g., a meeting participant or someone else nearby has tested positive for COVID), or to participate in a survey regarding the office space area, booking, organizer, etc.

In some cases, it may be necessary or desirable for a booking to be extended, e.g., a meeting that is going to run past it's reserved ending time. The central server can provide a mechanism for extending a booking. If the current office space area is available for the extended time period, then the central server can allow the booking to be extended; otherwise, the central server can recommend one or more alternative office space areas to which the meeting can be moved or alternatively can try to free-up the current office space area for the extended time period by finding an alternative office space area for the conflicting booking. In any case, the central server can automatically transfer booking information to a new location when a booking is extended or moved.

It should be noted that, while exemplary embodiments are described above with references to scheduling and monitoring office areas, embodiments of the present invention can be applied more generally to scheduling and monitoring of other types of resources in other contexts, such as areas in schools, libraries, restaurants, food courts, etc.

Various embodiments of the invention may be implemented at least in part in any conventional computer programming language. For example, some embodiments may be implemented in a procedural programming language (e.g., "C"), or in an object-oriented programming language (e.g., "C++"). Other embodiments of the invention may be implemented as a pre-configured, stand-alone hardware element and/or as preprogrammed hardware elements (e.g., application specific integrated circuits, FPGAs, and digital signal processors), or other related components.

In an alternative embodiment, the disclosed apparatus and methods (e.g., see the various flow charts described above) may be implemented as a computer program product for use with a computer system. Such implementation may include a series of computer instructions fixed on a tangible, non-transitory medium, such as a computer readable medium (e.g., a diskette, CD-ROM, ROM, or fixed disk). The series of computer instructions can embody all or part of the functionality previously described herein with respect to the system.

Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies.

Among other ways, such a computer program product may be distributed as a removable medium with accompanying printed or electronic documentation (e.g., shrink wrapped software), preloaded with a computer system (e.g., on system ROM or fixed disk), or distributed from a server or electronic bulletin board over the network (e.g., the Internet or World Wide Web). In fact, some embodiments may be implemented in a software-as-a-service model ("SAAS") or cloud computing model. Of course, some embodiments of the invention may be implemented as a combination of both software (e.g., a computer program product) and hardware. Still other embodiments of the invention are implemented as entirely hardware, or entirely software.

Computer program logic implementing all or part of the functionality previously described herein may be executed at different times on a single processor (e.g., concurrently) or may be executed at the same or different times on multiple processors and may run under a single operating system process/thread or under different operating system processes/threads. Thus, the term "computer process" refers generally to the execution of a set of computer program instructions regardless of whether different computer processes are executed on the same or different processors and regardless of whether different computer processes run under the same operating system process/thread or different operating system processes/threads.

Importantly, it should be noted that embodiments of the present invention may employ conventional components such as conventional computers (e.g., off-the-shelf PCs, mainframes, microprocessors), conventional programmable logic devices (e.g., off-the shelf FPGAs or PLDs), or conventional hardware components (e.g., off-the-shelf ASICs or discrete hardware components) which, when programmed or configured to perform the non-conventional methods described herein, produce non-conventional devices or systems. Thus, there is nothing conventional about the inventions described herein because even when embodiments are implemented using conventional components, the resulting devices and systems (e.g., the mobile communication device app and the central server) are necessarily non-conventional because, absent special programming or configuration, the conventional components do not inherently perform the described non-conventional functions.

The activities described and claimed herein provide technological solutions to problems that arise squarely in the realm of technology. These solutions as a whole are not well-understood, routine, or conventional and in any case provide practical applications that transform and improve computers and computer routing systems.

While various inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

Various inventive concepts may be embodied as one or more methods, of which examples have been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

Although the above discussion discloses various exemplary embodiments of the invention, it should be apparent that those skilled in the art can make various modifications that will achieve some of the advantages of the invention without departing from the true scope of the invention. Any references to the "invention" are intended to refer to exemplary embodiments of the invention and should not be construed to refer to all embodiments of the invention unless the context otherwise requires. The described embodiments are to be considered in all respects only as illustrative and not restrictive.

## Claims

1. An office space scheduling and monitoring system comprising:
a plurality of uniquely identifiable passive near-field communication (NFC) devices, each passive NFC device associated with a distinct office space, each distinct office space including at least one resource; and
a server in communication with a plurality of wirelessly-connected user mobile computing devices over a first network, each of the user mobile computing devices running an office space scheduling and monitoring application configured to read unique identifying information from a passive NFC device in an office space when the user scans the passive NFC device by placing the user's mobile communication device in close proximity to the passive NFC device and to produce a user interface providing access to office space scheduling and monitoring services managed by the server, the server including at least one processor and at least one tangible, non-transitory computer storage device having stored therein computer program instructions which, when executed by the at least one processor, causes the server to perform computer processes comprising:
providing a configuration interface for mapping each passive NFC device to the distinct office space with which it is associated and to define the at least one resource associated with that distinct office space;
maintaining a database storing a mapping of each passive NFC device to the distinct office space with which it is associated;
maintaining a database storing usage information for each distinct office space including at least availability of each resource associated with the distinct office space and identification of occupants utilizing each distinct office space;
receiving, from the office space scheduling and monitoring application in a given user mobile computing device, identifying information read from a given passive NFC device in a given office space in response to a user scan of the given passive NFC device;
identifying the given office space based on the identifying information received from the given user mobile computing device and the mapping maintained by the server;
retrieving usage information for the at least one resource associated with the identified office space; and
transmitting the retrieved usage information by the server to the given user mobile computing device via a wireless communication connection to the given user mobile computing device, such transmission activating the office space scheduling and monitoring application running on the given user mobile communication device to produce the user interface providing access to office space scheduling and monitoring services managed by the server including at least a map showing availability of office space resources and an interface for reserving office space resources and locating occupants of office spaces based on the usage information maintained by the server.

2. A system according to claim 1, wherein the office space scheduling and monitoring services comprise viewing availability of the at least one resource associated with the identified office space.

3. A system according to claim 1, wherein the office space scheduling and monitoring services comprise reservation of the at least one resource associated with the identified office space.

4. A system according to claim 1, wherein the office space scheduling and monitoring services comprise dynamic location of an occupant utilizing an office space.

5. A system according to claim 1, wherein the office space scheduling and monitoring services comprise:
detecting a change in usage information associated with the given office space; and
dynamically transmitting updated usage information by the server to the given user mobile computing device reflecting the change in usage information.

6. A system according to claim 1, wherein each distinct office space is associated with a floor of a building and wherein the user interface provides a map showing availability of office space resources for a selected floor.

7. A system according to claim 1, wherein the computer processes further include analytics of office space usage, and wherein the configuration interface provides a heat map depicting office space usage.

8. A computer-implemented method for providing office space scheduling and monitoring in a system having a plurality of uniquely identifiable passive near-field communication (NFC) devices, each passive NFC device associated with a distinct office space, each distinct office space including at least one resource, and a server in communication with a plurality of wirelessly-connected user mobile computing devices over a first network, each of the user mobile computing devices running an office space scheduling and monitoring application configured to read unique identifying information from a passive NFC device in an office space when the user scans the passive NFC device by placing the user's mobile communication device in close proximity to the passive NFC device and to produce a user interface providing access to office space scheduling and monitoring services managed by the server, the method comprising:
providing, by the server, a configuration interface for mapping each passive NFC device to the distinct office space with which it is associated and to define the at least one resource associated with that distinct office space;
maintaining, by the server, a database storing a mapping of each passive NFC device to the distinct office space with which it is associated;
maintaining, by the server, a database storing usage information for each distinct office space including at least availability of each resource associated with the distinct office space and identification of occupants utilizing each distinct office space;
receiving, by the server, from the office space scheduling and monitoring application in a given user mobile computing device, identifying information read from a given passive NFC device in a given office space in response to a user scan of the given passive NFC device;
identifying, by the server, the given office space based on the identifying information received from the given user mobile computing device and the mapping maintained by the server;
retrieving, by the server, usage information for the at least one resource associated with the identified office space; and
transmitting the retrieved usage information by the server to the given user mobile computing device via a wireless communication connection to the given user mobile computing device, such transmission activating the office space scheduling and monitoring application running on the given user mobile communication device to produce the user interface providing access to office space scheduling and monitoring services managed by the server including at least a map showing availability of office space resources and an interface for reserving office space resources and locating occupants of office spaces based on the usage information maintained by the server.

9. A method according to claim 8, wherein the office space scheduling and monitoring services comprise viewing availability of the at least one resource associated with the identified office space.

10. A method according to claim 8, wherein the office space scheduling and monitoring services comprise reservation of the at least one resource associated with the identified office space.

11. A method according to claim 8, wherein the office space scheduling and monitoring services comprise dynamic location of an occupant utilizing an office space.

12. A method according to claim 8, wherein the office space scheduling and monitoring services comprise:
detecting a change in usage information associated with the given office space; and
dynamically transmitting updated usage information by the server to the given user mobile computing device reflecting the change in usage information.

13. A method according to claim 8, wherein each distinct office space is associated with a floor of a building and wherein the user interface provides a map showing availability of office space resources for a selected floor.

14. A method according to claim 8, wherein the computer processes further include analytics of office space usage, and wherein the configuration interface provides a heat map depicting office space usage.

15. A tangible, non-transitory computer-readable medium having stored therein an office space scheduling and monitoring application which, when executed by a processor of a user mobile communication device, causes the server to perform computer processes comprising:
reading unique identifying information from a passive NFC device associated with an office space when the user scans the passive NFC device by placing the user mobile communication device in close proximity to the passive NFC device;
transmitting the unique identifying information to a server;
receiving, from the server, usage information related to the office space; and
producing, on a display of the user mobile communication device, a user interface providing access to office space scheduling and monitoring services managed by the server.
